# EUROPEAN PATENT APPLICATION

(11) **EP 4 624 283 A1**
(43) Date of publication of application: **01.10.2025**
(21) Application number: 25166156.7
(22) Date of filing: 25.03.2025
(51) Int. Cl.: B60T 1/00, B60T 1/06, F16D 63/00

(54) **PARKING APPARATUS AND PARKING CONTROL METHOD FOR VEHICLE, STORAGE MEDIUM, SYSTEM, AND VEHICLE**

(30) Priority: 29.03.2024 CN 202410387710
(71) Applicant: BYD Company Limited, Shenzhen, Guangdong 518118 (CN)
(72) Inventor: ZHOU, Yunfeng, Shenzhen, 518118 (CN); CHEN, Jinhan, Shenzhen, 518118 (CN); PAN, Li, Shenzhen, 518118 (CN); XIE, Lihua, Shenzhen, 518118 (CN); HU, Hao, Shenzhen, 518118 (CN)
(74) Representative: Taor, Simon Edward William

(57) **Abstract**

The present disclosure provides a parking apparatus and a parking control method for a vehicle, a storage medium, a system, and a vehicle. The parking apparatus for a vehicle includes an actuator and a driving element of the actuator. The actuator is movable relative to a frame and movable between an unlocked position, a locked position, and a gear engagement position. The driving element of the actuator is connected to the actuator to drive the actuator. A left wheel and a right wheel are not connected when the actuator is located at the unlocked position. The left wheel and the right wheel are connected together when the actuator is located at the locked position. The left wheel and the right wheel are connected together and are non-rotatable when the actuator is located at the gear engagement position. According to the parking apparatus for a vehicle of the present disclosure, parking is implemented without a need of controlling locking of each wheel. This is less difficult to control, and the control method is simpler.

## Description

### FIELD

The present disclosure generally relates to the technical field of vehicle control, and more specifically, to a parking apparatus and a parking control method for a vehicle, a storage medium, a system, and a vehicle.

### BACKGROUND

Currently, an existing mechanical parking mechanism mainly uses a conventional P-gear mechanism of a ratchet and pawl type, and has a complex structure. In a new energy vehicle architecture, an electronic parking brake (EPB) system is increasingly used to replace the conventional P-gear mechanism, so that internal space of a vehicle may be saved.

However, for a distributed driven vehicle having a strict parking requirement, an existing parking system needs to control a parking apparatus at each driving end for independent parking, which is difficult to control. A control method is complex.

### SUMMARY

A series of concepts in simplified forms are introduced in the summary. The concepts are further described in detail in the detailed descriptions. The summary of the present disclosure is not intended to limit key features and essential technical features of the claimed technical solutions, but is not intended to determine the protection scope of the claimed technical solutions.

To at least partially resolve the foregoing problem, a first aspect of the present disclosure provides a parking apparatus for a vehicle, including an actuator and a driving element of the actuator. The actuator is movable relative to a frame and movable between an unlocked position, a locked position, and a gear engagement position. The driving element of the actuator is connected to the actuator to drive the actuator. A left wheel and a right wheel are not connected when the actuator is located at the unlocked position. The left wheel and the right wheel are connected together when the actuator is located at the locked position. The left wheel and the right wheel are connected together and are non-rotatable when the actuator is located at the gear engagement position.

According to the parking apparatus for a vehicle according to the first aspect of the present disclosure, the left wheel and the right wheel may be driven independently respectively when the actuator is located at the unlocked position. The left wheel and the right wheel are locked together and driven jointly when the actuator is located at the locked position. The left wheel and the right wheel are fixed relative to the frame when the actuator is located at the gear engagement position, to implement parking. Therefore, according to the parking apparatus for a vehicle of the present disclosure, interlocking of the left wheel and the right wheel and the parking of the vehicle can be implemented through position switching of the actuator, which is simpler to control. Smaller space is occupied in this solution compared with a manner in which a parking mechanism is arranged at each driving end, so that internal space of the vehicle is saved.

In an embodiment, the actuator includes a gear sleeve. The gear sleeve located at the locked position is sleeved on a first half shaft and a second half shaft and is non-rotatable relative to both the first half shaft and the second half shaft. The first half shaft is connected to the left wheel. The second half shaft is connected to the right wheel.

In an embodiment, a spline groove is arranged in the gear sleeve. Spline teeth matched to the spline groove are arranged in both the first half shaft and the second half shaft.

In an embodiment, first meshing teeth are arranged in the gear sleeve to enable the gear sleeve located at the gear engagement position to be matched to a fixed structure of the vehicle, so that the gear sleeve is non-rotatable.

In an embodiment, the actuator further includes a fork. The fork fits over the gear sleeve and is connected to the driving element of the actuator. The gear sleeve is rotatable relative to the fork about a rotation axis. The driving element of the actuator is configured to drive the fork along a switch direction parallel to the rotation axis.

In an embodiment, the parking apparatus further includes a fixed end cover. The fixed end cover includes second meshing teeth configured to mesh with the first meshing teeth of the gear sleeve located at the gear engagement position.

In an embodiment, the parking apparatus further includes a limiting device and a transmission bar. The transmission bar is fixed to the fork. The limiting device is fixed relative to the frame of the vehicle. At least three limiting grooves are arranged in the transmission bar. The limiting device is abutted into the three limiting groove respectively when the gear sleeve is located at the unlocked position, the locked position, and the gear engagement position respectively.

In an embodiment, the limiting device includes:
a housing, where the housing is fixed relative to the frame of the vehicle;
a limiting ball, where the limiting ball is located at an end of the housing, and the limiting ball is configured to be inserted into the limiting groove; and
an elastic member, where the elastic member is arranged in the housing and connected to the limiting ball to abut against the limiting ball.

A second aspect of the present disclosure provides a parking control method for a vehicle, applied to the foregoing parking apparatus for a vehicle. The parking control method for a vehicle includes the following steps.

A locking operation is performed.

A gear engagement operation is performed if the locking operation can be normally performed.

Parking and gear engagement are completed if the gear engagement operation can be normally performed,
where the locking operation is that an actuator locks a left wheel and a right wheel, and the gear engagement operation is that the actuator locks the frame.

According to the parking control method for a vehicle in the second aspect of the present disclosure, during parking, the locking operation is first performed, to lock the left wheel and the right wheel, and then the gear engagement operation is performed, so that both the left wheel and the right wheel are locked to the frame, and parking is completed. There is no need to control locking of each wheel to implement parking. This is less difficult to control, and the control method is simpler.

In an embodiment, the parking control method for a vehicle further includes the following steps.

A parking instruction is received, and whether the vehicle is in a braked state is determined.

The locking operation is performed if the vehicle is in the braked state.

In an embodiment, the parking control method for a vehicle further includes the following steps.

Whether locking can be normally performed is determined based on abnormality of the actuator and a driving element thereof.

Intervention assistance is performed or a locking failure is prompted if locking is not normally performed.

In an embodiment, the parking control method for a vehicle further includes the following steps.

Whether gear engagement can be normally performed is determined based on the abnormality of the actuator and the driving element thereof.

Intervention assistance is performed or a gear engagement failure is prompted if gear engagement is not normally performed.

In an embodiment, the determining whether the vehicle is in a braked state includes the following steps.

Whether parking can be performed is determined based on a vehicle body posture and a vehicle speed.

A driver is prompted to park if parking cannot be performed.

Whether the vehicle is in a braked state is determined if parking can be performed. An electronic brake system is started to perform braking if the vehicle is not in the braked state.

In an embodiment, the abnormality of the actuator and the driving element thereof includes at least one of the following situations.

A stroke of the actuator is out of tolerance with a stroke of the driving element of the actuator.

The actuator and the driving element of the actuator are faulty.

A timeout occurs when the actuator performs locking.

The driving element of the actuator is blocked.

In an embodiment, the determining, based on abnormality of the actuator and a driving element thereof, whether locking can be normally performed includes the following steps.

A stroke of the actuator is read.

A running stroke of the driving element of the actuator is read.

Whether the stroke of the actuator is out of tolerance with the stroke of the driving element of the actuator is compared.

Locking is successfully performed if the stroke of the actuator is not out of tolerance with the stroke of the driving element of the actuator and it is checked that the actuator is located at the locked position.

In an embodiment, the determining, based on abnormality of the actuator and a driving element thereof, whether locking can be normally performed further includes the following steps.

Whether the actuator or the driving element of the actuator is faulty is determined if the stroke of the actuator is out of tolerance with the stroke of the driving element of the actuator. Locking fails to be performed if the actuator or the driving element of the actuator is faulty. The stroke data of the actuator and the driving element of the actuator is calibrated if the actuator or the driving element of the actuator is not faulty.

In an embodiment, the determining, based on abnormality of the actuator and a driving element thereof, whether locking can be normally performed further includes the following steps.

Locking fails to be performed if it is checked that the actuator is not located at the locked position and locking is timed out.

Whether the driving element of the actuator is blocked is determined if it is checked that the actuator is not located at the locked position and locking is not timed out. Whether the stroke of the actuator is out of tolerance with the stroke of the driving element of the actuator is re-compared if blocking is not occurred. Intervention assistance is performed if blocking occurs.

In an embodiment, the determining, based on abnormality of the actuator and a driving element thereof, whether gear engagement can be normally performed includes the following steps.

The stroke of the actuator is read.

A running stroke of the driving element of the actuator is read.

Whether the stroke of the actuator is out of tolerance with the stroke of the driving element of the actuator is compared.

Gear engagement is successfully performed if the stroke of the actuator is not out of tolerance with the stroke of the driving element of the actuator and it is checked that the actuator is located at the gear engagement position.

In an embodiment, the determining, based on abnormality of the actuator and a driving element thereof, whether gear engagement can be normally performed further includes the following steps.

Whether the actuator or the driving element of the actuator is faulty is determined if the stroke of the actuator is out of tolerance with the stroke of the driving element of the actuator. Gear engagement fails to be performed if the actuator or the driving element of the actuator is faulty. The stroke data of the actuator and the driving element of the actuator is calibrated if the actuator or the driving element of the actuator is not faulty.

In an embodiment, the determining, based on abnormality of the actuator and a driving element thereof, whether gear engagement can be normally performed further includes the following steps.

Gear engagement fails to be performed if it is checked that the actuator is not located at the gear engagement position and gear engagement is timed out.

Whether the driving element of the actuator is blocked is determined if it is checked that the actuator is not located at the gear engagement position and locking is not timed out. Whether the stroke of the actuator is out of tolerance with the stroke of the driving element of the actuator is re-compared if blocking is not occurred. Intervention assistance is performed if blocking occurs.

**In** an embodiment, the performing intervention assistance includes the following steps.

A brake situation is determined.

A drive motor of the vehicle is driven to output torque and locking or gear engagement is continued to be performed if the vehicle is braked.

Whether locking or gear engagement is successfully performed is determined.

Intervention assistance is exited if locking or gear engagement is successfully performed.

Intervention assistance is ended, and an error is reported if locking or gear engagement is not successfully performed, and locking or gear engagement is timed out.

The drive motor of the vehicle is continued to be driven to output the torque if locking is not performed or gear engagement is successfully performed and locking or gear engagement is not timed out.

In an embodiment, the determining a brake situation includes the following steps.

Whether an electronic brake system is normal is determined.

Intervention assistance is ended, and the error is reported if the electronic brake system is abnormal.

A third aspect of the present disclosure provides a storage medium. A memory stores a computer program executed by a processor. The computer program, when executed by the processor, causes the processor to perform the foregoing parking control method for a vehicle.

According to the storage medium in the third aspect of the present disclosure, the stored parking control method has low control difficulty, and occupies small space.

A fourth aspect of the present disclosure provides a parking and gear engagement control system for a vehicle, including the foregoing parking apparatus for a vehicle, a memory, and a processor. The memory has a computer program stored therein and executed by the processor. The computer program, when executed by the processor, causes the processor to perform the foregoing parking control method for a vehicle.

The parking and gear engagement control system for a vehicle according to the fourth aspect of the present disclosure has low control difficulty, and occupies small space.

A fifth aspect of the present disclosure provides a vehicle. The foregoing parking and gear engagement control system for a vehicle is arranged in the vehicle.

According to the vehicle in the fifth aspect of the present disclosure, a parking structure is simplified, parking control difficulty is reduced, and a utilization rate of internal space of the vehicle is high.

### BRIEF DESCRIPTION OF THE DRAWINGS

The following drawings of the implementations of the present disclosure are used as a part of the present disclosure for understanding the present disclosure. The implementations of the present disclosure and descriptions thereof are shown in the accompanying drawings to explain the principles of the present disclosure. In the accompanying drawings:
FIG. 1 is a schematic diagram of a parking apparatus for a vehicle according to an embodiment of the present disclosure, and in this case, an actuator is located at a locked position;
FIG. 2 is a schematic diagram of a match state of a fixed end cover and a gear sleeve;
FIG. 3 is a schematic diagram of cooperation of a limiting device and a transmission bar;
FIG. 4 is a schematic flowchart of a parking control method for a vehicle according to a preferred embodiment of the present disclosure;
FIG. 5 is a schematic flowchart of determining whether locking can be normally performed;
FIG. 6 is a schematic flowchart of determining whether gear engagement can be normally performed; and
FIG. 7 is a schematic flowchart of performing intervention assistance.

In the drawings:
100: driving element of an actuator; 110: actuator;
111: first meshing teeth; 112: gear sleeve;
140: fixed end cover; 141: second meshing teeth;
113: fork; 120: first half shaft;
121: first half shaft gear; 130: second half shaft;
131: second half shaft gear; 150: transmission bar (or rod);
151: limiting groove; 160: limiting device;
161: housing; 162: limiting ball;
Z: driving direction of the actuator; 114: spline groove

### DETAILED DESCRIPTION

In the following descriptions, numerous specific details are given to facilitate a more thorough understanding of the present disclosure. However, it is apparent to a person skilled in the art that the implementations of the present disclosure may be implemented without one or more of these details. In other examples, to avoid confusion with the implementations of the present disclosure, some technical features known in the art are not described

In this specification, ordinal numbers such as "first" and "second" cited in the present disclosure are merely identifiers and do not have any other meanings, such as a specific order. In addition, for example, the term "first component" does not imply the existence of "second component", and the term "second component" does not imply the existence of "first component".

In this specification, "upper", "lower", "front", "rear", "left", "right", and the like are merely used to indicate relative positional relationships between relevant parts, but do not limit absolute positions of the relevant parts.

In this specification, "equal", "the same", and the like are not strictly limited in a mathematical and/or geometric sense, and also include errors that may be understood by a person skilled in the art and that are allowed for manufacturing or use.

Unless otherwise specified, the numerical range in this specification includes not only the entire range within the two endpoints thereof, but also several sub-ranges included therein.

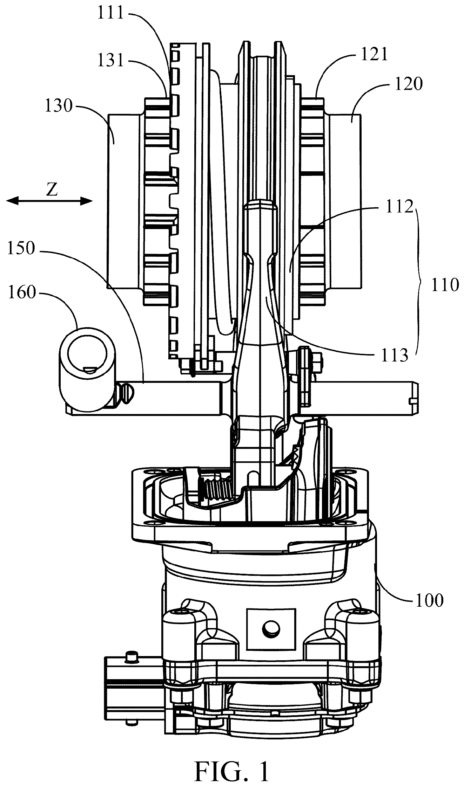

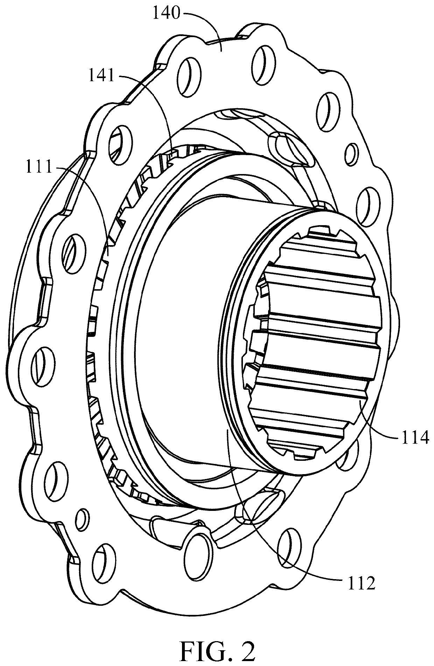

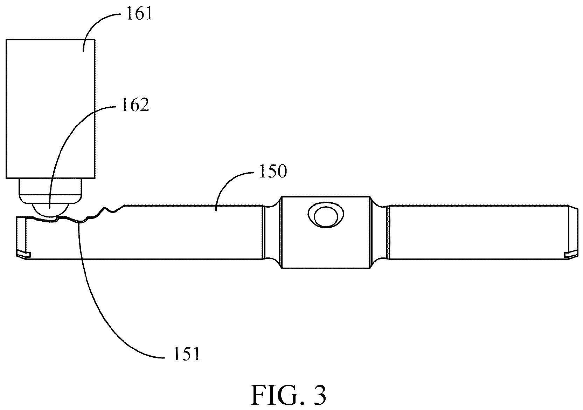

In an embodiment, FIG. 1 to FIG. 3 show a parking apparatus for a vehicle, including an actuator 110 and a driving element of the actuator 100. The actuator 110 is movable relative to a frame and movable between an unlocked position, a locked position, and a gear engagement position. The driving element of the actuator 100 is connected to the actuator 110 to drive the actuator 110. A left wheel and a right wheel are not connected when the actuator 110 is located at the unlocked position. The left wheel and the right wheel are connected together when the actuator 110 is located at the locked position. The left wheel and the right wheel are connected together and fixed relative to the frame when the actuator 110 is located at the gear engagement position.

According to the parking apparatus for a vehicle of the present disclosure, the left wheel and the right wheel may be driven independently respectively when the actuator 110 is located at the unlocked position. The left wheel and the right wheel are locked together and driven jointly when the actuator 110 is located at the locked position. However, the left wheel and the right wheel are fixed relative to the frame when the actuator 110 is located at the gear engagement position, to implement parking. Therefore, according to the parking apparatus for a vehicle of the present disclosure, interlocking of the left wheel and the right wheel and the parking of the vehicle can be implemented through position switching of the actuator 110, which is simpler to control. Smaller space is occupied in this solution compared with a manner in which a parking mechanism is arranged at each driving end, so that internal space of the vehicle is saved.

For example, the actuator 110 may alternatively include a gear sleeve 112 and a fork 113. A spline groove is arranged in the gear sleeve 112. The fork 113 fits over the gear sleeve 112 and is connected to the driving element of the actuator 100. The driving element of the actuator 100 may alternatively be a linear motor. The driving element of the actuator 100 drives the gear sleeve 112 to move along a driving direction Z of the actuator through the fork 113. The driving direction Z is parallel to an axis of the gear sleeve 112. Refer to FIG. 1. A first half shaft 120 is arranged in the left wheel, and a second half shaft 130 is arranged in the right wheel. A first half shaft gear 121 is arranged on the first half shaft 120, and a second half shaft gear 131 is arranged on the second half shaft 130. Both the first half shaft gear 121 and the second half shaft gear 131 are spline teeth. A spline groove 113 matched to the first half shaft gear 121 and the second half shaft gear 131 is formed in the gear sleeve.

Further, first meshing teeth 111 are arranged at a side of the gear sleeve 112 close to the second half shaft 130. The parking apparatus further includes a fixed end cover 140. The fixed end cover 140 includes second meshing teeth 141 configured to mesh with the first meshing teeth 111 of the gear sleeve 112 located at the gear engagement position.

When the actuator 110 is located at the unlocked position, the gear sleeve 112 is sleeved on the first half shaft gear 121 and matches to the first half shaft gear 121, and the second half shaft gear 131 is disengaged from the gear sleeve 112. In this case, there is no locking between the first half shaft 120 and the second half shaft 130, and the left wheel and the right wheel rotate independently. As shown in FIG. 1, when the actuator 110 is located at the locked position, the gear sleeve 112 is sleeved on the second half shaft gear 131, and the gear sleeve 112 matches to the second half shaft gear 131, so that the first half shaft 120 and the second half shaft 130 are locked together. In this case, the left wheel and the right wheel rotate synchronously. When the actuator 110 is located at the gear engagement position, the first meshing teeth 111 of the gear sleeve 112 mesh with the second meshing teeth 141 of the fixed end cover 140, so that the gear sleeve 112, the first half shaft gear 121, and the second half shaft gear 131 are fixed relative to the frame. Therefore, parking of the vehicle is implemented.

In an embodiment, the first meshing teeth 111 and the second meshing teeth 141 may be end surface teeth, to facilitate matching between the gear sleeve 112 and the fixed end cover 140. The fixed end cover 140 may be fixed to a drive assembly case of the vehicle through a fastener, so that the fixed end cover 140 is fixed relative to the frame of the vehicle.

In an embodiment, the parking apparatus further includes a limiting device 160 and a transmission bar 150 (or transmission rod). The transmission bar 150 is fixed to the fork 113. The limiting device 160 is fixed relative to the frame of the vehicle (optionally, may be fixed to the drive assembly case of the vehicle through the fastener). At least three limiting grooves 151 are arranged in the transmission bar 150. When the gear sleeve 112 is located at the unlocked position, the locked position, and the gear engagement position, the limiting device 160 is abutted into the three limiting groove 151 respectively, so that the gear sleeve 112 is more stable, and is not easy to slip at different gear positions.

Further, the limiting device 160 includes a housing 161, a limiting ball 162, and an elastic member (not shown in the figure). The housing 161 is fixed relative to the frame of the vehicle. The limiting ball 162 is located at an end of the housing, and the limiting ball 162 is configured to be inserted into the limiting groove 151. The elastic member is arranged in the housing 161 and connected to the limiting ball 162, and is configured to abut against the limiting ball 162, so that the gear sleeve 112 has some damping at different gear positions.

It can be learned that, a locking operation is to drive the actuator 110 to the locked position, so that the left wheel and the right wheel are locked. A gear engagement operation is to drive the actuator 110 to the gear engagement position, so that both the left wheel and the right wheel are fixed relative to the frame, to implement parking of the vehicle.

The present disclosure further provides a parking control method for a vehicle, and the parking control method for a vehicle includes the following steps.

A locking operation is performed.

A gear engagement operation is performed if the locking operation can be normally performed.

Parking and gear engagement are completed if the gear engagement operation can be normally performed.

The locking operation is that the actuator 110 locks the left wheel and the right wheel, and the gear engagement operation is that the actuator 110 locks the frame.

According to the parking control method for a vehicle of the present disclosure, during parking, the locking operation is first performed, to lock the left wheel and the right wheel, and then the gear engagement operation is performed, so that both the left wheel and the right wheel are locked to the frame, and parking is completed. Parking is implemented without a need of controlling locking of each wheel. This is less difficult to control, and the control method is simpler.

In an embodiment, the parking control method for a vehicle further includes the following steps.

A parking instruction is received, and whether the vehicle is in a braked state is determined.

The locking operation is performed if the vehicle is in the braked state.

In an embodiment, the parking control method for a vehicle according to the present disclosure further includes the following steps.

Whether locking can be normally performed is determined based on abnormality of the actuator 110 and a driving element thereof.

Intervention assistance is performed or a locking failure is prompted if locking cannot be normally performed.

The locking operation is determined through the abnormality of the actuator 110 and the driving element thereof, and intervention assistance is performed when locking cannot be normally performed, so that a success rate of locking is improved.

In an embodiment, the parking control method for a vehicle according to the present disclosure further includes the following steps.

Whether gear engagement can be normally performed is determined based on the abnormality of the actuator 110 and the driving element thereof.

Intervention assistance is performed or a gear engagement failure is prompted if gear engagement cannot be normally performed.

The gear engagement operation is determined through the abnormality of the actuator 110 and the driving element thereof, and intervention assistance is performed when gear engagement cannot be normally performed, so that a success rate of gear engagement parking is improved.

In an embodiment, the determining whether the vehicle is in a braked state includes the following steps.

Whether parking can be performed is determined based on a vehicle body posture and a vehicle speed.

A driver is prompted to park if parking cannot be performed.

Whether the vehicle is in the braked state is determined if parking can be performed, and an electronic brake system is started to perform braking if the vehicle is not in the braked state.

The parking is started after it is determined that the vehicle is in the braked state, thereby avoiding a damage caused by starting parking to the parking and gear engagement apparatus when the vehicle is not braked. In addition, if the brake system is faulty, the driver may further activate the electronic brake system through the parking gear, so that driving safety is improved.

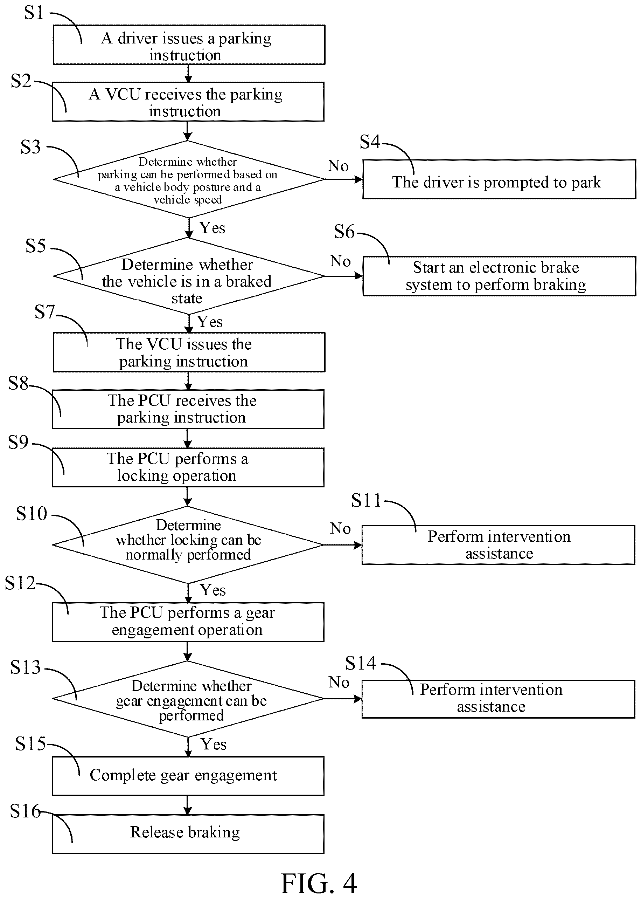

In conclusion, FIG. 4 is a schematic flowchart of a parking control method for a vehicle according to a preferred embodiment. The parking control method for a vehicle includes the following steps.
S1: A driver issues a parking instruction.
S2: A VCU receives the parking instruction.
S3: Whether parking can be performed is determined based on a vehicle body posture and a vehicle speed. If no, S4 is performed. If yes, S5 is performed.
S4: The driver is prompted to park.
S5: Whether the vehicle is in a braked state is determined. If no, S6 is performed. If yes, S7 is performed.
S6: An electronic brake system is started to perform braking.
S7: The VCU issues the parking instruction.
S8: The PCU receives the parking instruction.
S9: The PCU performs a locking operation.
S10: Whether locking can be normally performed is determined. If no, S11 is performed. If yes, S12 is performed.
S11: Intervention assistance is performed.
S12: The PCU performs a gear engagement operation.
S13: Whether gear engagement can be performed is determined. If no, S14 is performed. If yes, S15 is performed.
S14: Intervention assistance is performed.
S15: Gear engagement is completed.
S16: Braking is released.

The vehicle control unit (VCU) is a core component of an electronic control system of the vehicle, and is configured to receive a sensor signal and control operations of the actuator 110. The parking control unit (PCU) is configured to receive a signal and control the actuator 110 to implement a parking operation of the vehicle.

In an embodiment, abnormality of the actuator 110 and a driving element thereof includes at least one of the following situations.

A stroke of the actuator 110 is out of tolerance with a stroke of the driving element of the actuator 110.

The actuator 110 and the driving element of the actuator 110 are faulty.

A timeout occurs when the actuator 110 performs locking.

The driving element of the actuator 110 is blocked.

If the foregoing abnormality occurs in the actuator 110 and the driving element of the actuator 110, intervention assistance is performed, or a locking failure and a gear engagement failure are prompted.

Specifically, determining, based on the abnormality of the actuator 110 and the driving element thereof, whether locking can be normally performed includes the following steps.

The stroke of the actuator 110 is read.

A running stroke of the driving element of the actuator 110 is read.

Whether the stroke of the actuator 110 is out of tolerance with the stroke of the driving element of the actuator 110 is compared.

Locking is successfully performed if the stroke of the actuator 110 is not out of tolerance with the stroke of the driving element of the actuator 110 and it is checked that the actuator 110 is located at the locked position.

The stroke of the actuator 110 and the stroke of the driving element of the actuator 110 are compared to determine whether driving of the driving element of the actuator 110 to the actuator 110 is accurate. If the driving element of the actuator 110 cannot accurately drive the actuator 110, locking may be failed, and the stroke of the actuator 110 and the stroke of the driving element thereof need to be corrected.

Further, determining, based on the abnormality of the actuator 110 and the driving element thereof, whether locking can be normally performed further includes the following steps.

Whether the actuator 110 or the driving element of the actuator 110 is faulty is determined if the stroke of the actuator 110 is out of tolerance with the stroke of the driving element of the actuator 110. Locking is failed to be performed if the actuator 110 or the driving element of the actuator 110 is faulty. The stroke data of the actuator 110 and the driving element of the actuator 110 is checked if the actuator 110 or the driving element of the actuator 110 is not faulty.

If the actuator 110 or the driving element of the actuator 110 is faulty, the stroke of the actuator 110 may be out of tolerance with the stroke of the driving element, and locking cannot be accurately performed. In this case, it is prompted that locking is failed. If the actuator 110 or the driving element of the actuator 110 does not is not faulty, the stroke data of the actuator 110 and the driving element of the actuator 110 needs to be calibrated, so that locking can be accurately performed.

In addition, determining, based on the abnormality of the actuator 110 and the driving element thereof, whether locking can be normally performed further includes the following steps.

Locking is failed to be performed if it is checked that the actuator 110 is not located at the locked position and locking is timed out.

Whether the driving element of the actuator 110 is blocked is determined if it is checked that the actuator 110 is not located at the locked position and locking is not timed out. Whether the stroke of the actuator 110 is out of tolerance with the stroke of the driving element of the actuator 110 is re-compared if blocking is not occurred. Intervention assistance is performed if blocking occurs.

Although the stroke of the actuator 110 is not out of tolerance with the stroke of the driving element thereof, locking is timed out, and there is no locking at all times. Therefore, there is another fault, which indicates that locking is faulty. When the driving element of the actuator 110 is blocked, the actuator 110 is not located at the locked position, so that intervention assistance may be performed to ensure locking. If the driving element of the actuator 110 is not blocked, the stroke of the actuator 110 is re-compared with the stroke of the driving element of the actuator 110, and the PCU synchronously performs the locking operation until locking is successfully performed.

In an embodiment, the stroke of the actuator 110 is sensed by a stroke sensor, and the stroke of the driving element of the actuator 110 may also be calculated by using a step stroke sensed by a sensor arranged in the driving element of the actuator 110.

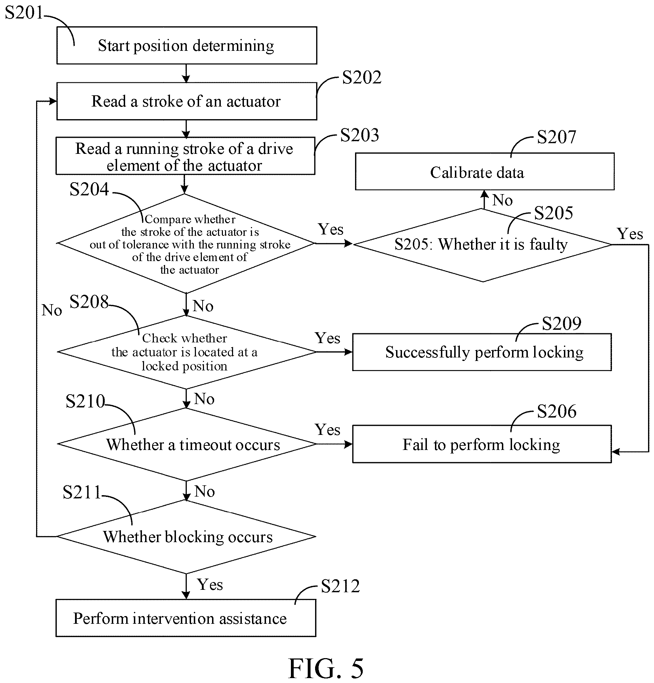

FIG. 5 is a schematic flowchart of determining whether locking can be normally performed according to a preferred embodiment. A process of determining whether locking can be normally performed includes the following steps.
S201: Position determining is started.
S202: A stroke of an actuator 110 is read.
S203: A running stroke of a driving element of the actuator 110 is read.
S204: Whether the stroke of the actuator 110 is out of tolerance with the running stroke of the driving element of the actuator 110 is compared. If yes, S205 is performed. If no, S208 is performed.
S205: Whether the actuator 110 and the driving element of the actuator 110 are faulty is determined. If yes, S206 is performed. If no, S207 is performed.
S206: Locking is failed to be performed.
S207: Data is calibrated.
S208: Whether the actuator 110 is located at a locked position is checked. If yes, S209 is performed. If no, S210 is performed.
S209: Locking is successfully performed.
S210: Whether a timeout occurs is determined. If yes, S206 is performed. If no, S211 is performed.
S211: Whether the driving element of the actuator 110 is blocked is determined. If no, S202 is performed. If yes, S212 is performed.
S212: Intervention assistance is performed.

In S206, stroke data of the actuator 110 and the driving element is calibrated based on historical data.

Through the process of determining whether locking can be normally performed as shown in FIG. 5, abnormality of the locking process may be determined and processed, to improve a locking success rate.

Specifically, determining, based on the abnormality of the actuator 110 and the driving element thereof, whether gear engagement can be normally performed includes the following steps.

The stroke of the actuator 110 is read.

The running stroke of the driving element of the actuator 110 is read.

Whether the stroke of the actuator 110 is out of tolerance with the stroke of the driving element of the actuator 110 is compared.

Gear engagement is successfully performed if the stroke of the actuator 110 is not out of tolerance with the stroke of the driving element of the actuator 110 and it is checked that the actuator 110 is located at a gear engagement position.

The stroke of the actuator 110 and the stroke of the driving element of the actuator 110 are compared to determine whether driving of the driving element of the actuator 110 to the actuator 110 is accurate. If the driving element of the actuator 110 cannot accurately drive the actuator 110, gear engagement may fail, and the stroke of the actuator 110 and the stroke of the driving element thereof need to be corrected.

Further, determining, based on the abnormality of the actuator 110 and the driving element thereof, whether gear engagement can be normally performed further includes the following steps.

Whether the actuator 110 or the driving element of the actuator 110 is faulty is determined if the stroke of the actuator 110 is out of tolerance with the stroke of the driving element of the actuator 110. Gear engagement fails to be performed if the actuator 110 or the driving element of the actuator 110 is faulty. The stroke data of the actuator 110 and the driving element of the actuator 110 is calibrated if the actuator 110 or the driving element of the actuator 110 is not faulty.

If the actuator 110 or the driving element of the actuator 110 is faulty, the stroke of the actuator 110 may be out of tolerance with the stroke of the driving element, and gear engagement cannot be accurately performed. In this case, a gear engagement failure is prompted. If the actuator 110 or the driving element of the actuator 110 is not faulty, the stroke data of the actuator 110 and the driving element of the actuator 110 needs to be calibrated, so that gear engagement can be accurately performed.

In addition, determining, based on the abnormality of the actuator 110 and the driving element thereof, whether gear engagement can be normally performed further includes the following steps.

Gear engagement fails to be performed if it is checked that the actuator 110 is not located at the gear engagement position and gear engagement is timed out.

Whether the driving element of the actuator 110 is blocked is determined if it is checked that the actuator 110 is not located at the gear engagement position and gear engagement is not timed out. Whether the stroke of the actuator 110 is out of tolerance with the stroke of the driving element of the actuator 110 is re-compared if blocking is not occurred. Intervention assistance is performed if blocking occurs.

Although the stroke of the actuator 110 is not out of tolerance with the stroke of the driving element thereof, gear engagement is timed out, and there is no gear engagement at all times, there should be another fault, which indicates a gear engagement is faulty. When the driving element of the actuator 110 is blocked, the actuator 110 is not located at the gear engagement position, so that intervention assistance can be performed to ensure gear engagement. If the driving element of the actuator 110 is not blocked, the stroke of the actuator 110 is re-compared with the stroke of the driving element of the actuator 110, and the PCU synchronously performs a gear engagement operation until gear engagement is successfully performed.

In an embodiment, the stroke of the actuator 110 is sensed by a stroke sensor, and the stroke of the driving element of the actuator 110 may also be calculated by using a step stroke sensed by a sensor arranged in the driving element of the actuator 110.

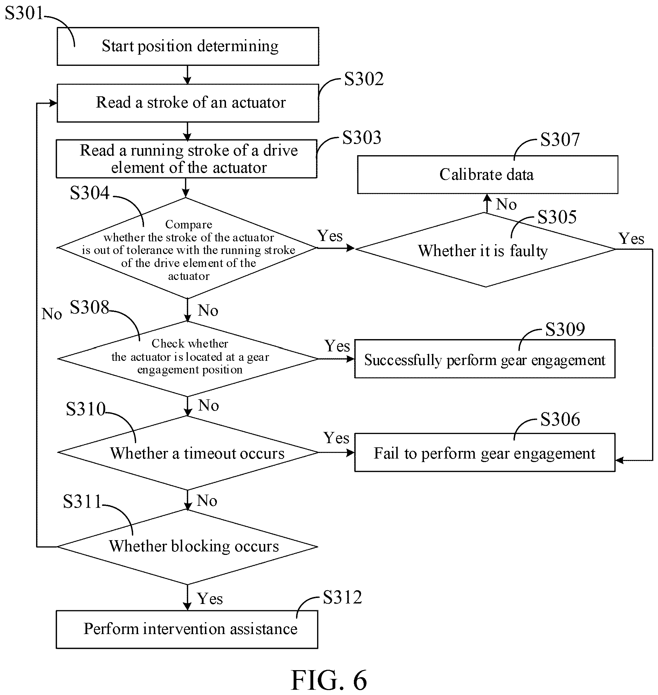

FIG. 6 is a schematic flowchart of determining whether gear engagement can be normally performed according to a preferred embodiment. A process of determining whether gear engagement can be normally performed includes the following steps.
S301: Position determining is started.
S302: A stroke of an actuator 110 is read.
S303: A running stroke of a driving element of the actuator 110 is read.
S304: Whether the stroke of the actuator 110 is out of tolerance with the running stroke of the driving element of the actuator 110 is compared. If yes, S305 is performed. If no, S308 is performed.
S305: Whether the actuator 110 and the driving element of the actuator 110 fail is determined. If yes, S306 is performed. If no, S307 is performed.
S306: Gear engagement fails to be performed.
S307: Data is calibrated.
S308: Whether the actuator 110 is located at a gear engagement position is checked. If yes, S309 is performed. If no, S310 is performed.
S309: Gear engaging is successfully performed.
S310: Whether a timeout occurs is determined. If yes, S306 is performed. If no, S311 is performed.
S311: Whether the driving element of the actuator 110 is blocked is determined. If no, S302 is performed. If yes, S312 is performed.
S312: Intervention assistance is performed.

In S306, stroke data of the actuator 110 and the driving element is determined based on historical data.

Through the process of determining whether gear engagement can be normally performed as shown in FIG. 6, abnormality of the gear engagement process may be determined and processed, to improve a gear engagement success rate.

The intervention assistance is performed mainly by outputting torque by a drive motor of a left wheel and a right wheel.

During locking, the drive motor of the left wheel and the right wheel outputs the torque. A first half shaft gear 121 and a second half shaft gear 131 are reversed. In addition, the driving element of the actuator 110 drives the actuator 110, so that the second half shaft gear 131 is aligned with a spline groove of a gear sleeve 112, and the gear sleeve 112 is sleeved on the second half shaft gear 131, to implement locking.

During gear engagement, the driving motor of the left wheel or the right wheel outputs the torque, so that the gear sleeve 112 is rotated. In addition, the driving element of the actuator 110 drives the actuator 110, so that parking end surface teeth 111 of the gear sleeve 112 are aligned and mesh with end surface teeth of a frame, to implement parking.

Further, the performing intervention assistance includes the following steps.

A brake situation is determined.

A drive motor of the vehicle is driven to output the torque and locking or gear engagement is continued to be performed if the vehicle is braked.

Whether locking or gear engagement is successfully performed is determined.

Intervention assistance is exited if locking or gear engagement is successfully performed.

Intervention assistance is ended, and an error is reported if locking or gear engagement is not successfully performed, and locking or gear engagement is timed out.

The drive motor of the vehicle is continued to be driven to output the torque if locking is not performed or gear engagement is successfully performed and locking or gear engagement is not timed out.

The brake situation is determined again before intervention assistance, to prevent the parking apparatus from being damaged. After intervention assistance, whether locking or gear engagement is successfully performed or is timed out is determined, to determine whether to exit assistance to complete parking or reporting of the error.

Further, the determining a brake situation includes the following steps.

Whether an electronic brake system is normal is determined.

Intervention assistance is ended, and the error is reported if the electronic brake system is abnormal.

An abnormal electronic brake system may cause the vehicle to be unbraked. For example, intervention assistance may cause the parking apparatus to be damaged. Therefore, whether the electronic brake system is normal is to be determined again before intervention assistance.

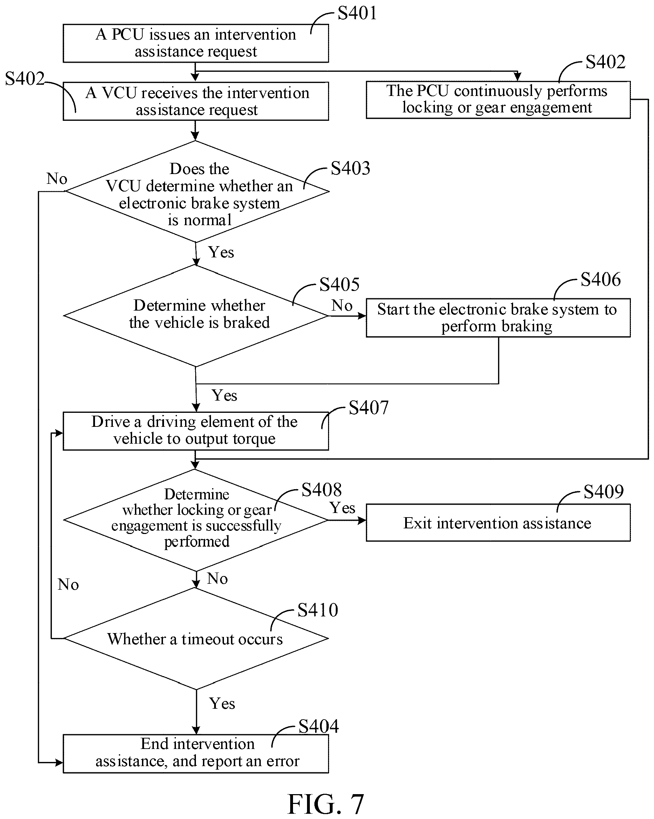

FIG. 7 shows a process of performing intervention assistance. The process includes the following steps.
S401: A PCU issues an intervention assistance request.
S402: A VCU receives the intervention assistance request, and the PCU continuously performs locking or gear engagement.
S403: The VCU determines whether an electronic brake system is normal. If no, S404 is performed. If yes, S405 is performed.
S404: Intervention assistance is ended, and an error is reported.
S405: Whether the vehicle is braked is determined. If no, S406 is performed. If yes, S407 is performed.
S406: The electronic brake system is started to perform braking and S407 is performed.
S407: A driving element of the vehicle is driven to output torque.
S408: Whether locking or gear engagement is successfully performed is determined. If yes, S409 is performed. If no, S411 is performed.
S409: Intervention assistance is exited.
S410: Whether a timeout occurs is determined. If yes, S404 is performed. If no, S407 is performed.

An intervention assistance process is performed to prevent an operation of parking without a brake. Therefore, this is beneficial to preventing the parking apparatus from being damaged, security is high, and a success rate of intervention assistance is high.

The present disclosure further provides a storage medium. The memory stores a computer program executed by a processor. The computer program, when executed by the processor, causes the processor to perform the foregoing parking control method for a vehicle.

According to the storage medium of the present disclosure, the stored parking control method has low control difficulty, and occupies small space.

The present disclosure further provides a parking and gear engagement control system for a vehicle, including the foregoing parking apparatus for a vehicle, a memory, and a processor. The memory has a computer program stored therein and executed by the processor. The computer program, when executed by the processor, causes the processor to perform the foregoing parking control method for a vehicle. The parking and gear engagement control system for a vehicle according to the present disclosure has low control difficulty, and occupies small space.

The present disclosure further provides a vehicle. The foregoing parking and gear engagement control system for a vehicle is arranged in the vehicle. According to the vehicle of the present disclosure, a parking structure is simplified, parking control difficulty is reduced, and a utilization rate of internal space of the vehicle is high.

As discussed, embodiments can provide a parking apparatus for a vehicle, the parking apparatus comprising an actuator and a driving element of the actuator, the actuator being movable relative to a frame and movable between an unlocked position, a locked position, and a gear engagement position. The driving element of the actuator is connected to the actuator and is configured to drive the actuator. The parking apparatus is configured such that a left wheel and a right wheel are not connected when the actuator is located at the unlocked position; the left wheel and the right wheel are connected together when the actuator is located at the locked position; and the left wheel and the right wheel are connected together and are non-rotatable when the actuator is located at the gear engagement position.

Embodiments can provide a parking control method for a vehicle comprising: performing a locking operation; performing a gear engagement operation if the locking operation can be normally performed; and completing parking and gear engagement if the gear engagement operation can be normally performed, wherein the locking operation is that the actuator locks a left wheel and a right wheel, and the gear engagement operation is that the actuator locks a frame.

Embodiments can provide a storage medium, the storage medium having a computer program executable by a processor stored therein, wherein the computer program, when executed by the processor, causes the processor to perform the parking control method for a vehicle according to any of the discussed embodiments.

Embodiments can provide a parking and gear engagement control system for a vehicle, comprising a parking apparatus for a vehicle according to any one of the discussed embodiments, a memory, and a processor, the memory having a computer program stored therein and executable by the processor, the computer program, when executed by the processor, causing the processor to perform the parking control method for a vehicle according to any of the discussed embodiments.

Unless otherwise defined, meanings of technical and scientific terms used in this specification are the same as those usually understood by a person skilled in the art to which the present disclosure belongs. Terms used in this specification are merely intended to describe specific objectives, but are not intended to limit the present disclosure. Terms such as "arrange" in this specification may mean that one component is directly attached to another component, or that one component is attached to another component through an intermediary. A feature described in this specification in an implementation may be applied to another implementation alone or in combination with other features, unless the feature is not applicable or otherwise specified in the another implementation.

The present disclosure is described through the foregoing implementations. However, the foregoing implementations are merely for the objectives of example and description, and are not intended to limit the present disclosure to the scope of the described implementations. A person skilled in the art may understand that many more variations and modifications may be made according to the teachings of the present disclosure, and these variations and modifications all fall within the scope of protection claimed in the present disclosure.

## Claims

1. A parking apparatus for a vehicle, comprising an actuator and a driving element of the actuator, the actuator being movable relative to a frame and movable between an unlocked position, a locked position, and a gear engagement position; the driving element of the actuator being connected to the actuator and being configured to drive the actuator;
wherein the parking apparatus is arranged such that a left wheel and a right wheel are not connected when the actuator is located at the unlocked position; the left wheel and the right wheel are connected together when the actuator is located at the locked position; and the left wheel and the right wheel are connected together and are non-rotatable when the actuator is located at the gear engagement position.

2. The parking apparatus for a vehicle according to claim 1, wherein the actuator comprises a gear sleeve, wherein the gear sleeve located at the locked position is sleeved on a first half shaft and a second half shaft and is non-rotatable relative to both the first half shaft and the second half shaft, wherein the first half shaft is connected to the left wheel, and the second half shaft is connected to the right wheel;
optionally wherein a spline groove is arranged in the gear sleeve, and spline teeth matched to the spline groove are arranged in both the first half shaft and the second half shaft.

3. The parking apparatus for a vehicle according to claim 2, wherein the first meshing teeth are arranged in the gear sleeve to enable the gear sleeve located at the gear engagement position to be matched to a fixed structure of the vehicle, to enable the gear sleeve to be non-rotatable;
optionally further comprising a fixed end cover, wherein the fixed end cover comprises second meshing teeth configured to mesh with the first meshing teeth of the gear sleeve located at the gear engagement position.

4. The parking apparatus for a vehicle according to claim 2 or 3, wherein the actuator further comprises a fork, wherein the fork fits over the gear sleeve and is connected to the driving element of the actuator, the gear sleeve is rotatable relative to the fork about a rotation axis, and the driving element of the actuator is configured to drive the fork along a switch direction parallel to the rotation axis;
optionally further comprising a limiting device and a transmission rod, the transmission rod being fixed to the fork, the limiting device being fixed relative to the frame of the vehicle, at least three limiting grooves being arranged in the transmission rod, and the limiting device being abutted into the three limiting groove respectively when the gear sleeve is located at the unlocked position, the locked position, and the gear engagement position respectively;
further optionally wherein the limiting device comprises: a housing, wherein the housing is fixed relative to the frame of the vehicle; a limiting ball, wherein the limiting ball is located at an end of the housing, and the limiting ball is configured to be inserted into the limiting groove; and an elastic member, wherein the elastic member is arranged in the housing and connected to the limiting ball to abut against the limiting ball.

5. A parking control method for a vehicle, applied to the parking apparatus for a vehicle according to any one of claims 1 to 4, comprising:
performing a locking operation;
performing a gear engagement operation if the locking operation can be normally performed; and
completing parking and gear engagement if the gear engagement operation can be normally performed,
wherein the locking operation is that the actuator locks a left wheel and a right wheel, and the gear engagement operation is that the actuator locks a frame.

6. The parking control method for a vehicle according to claim 5, further comprising:
receiving a parking instruction and determining whether the vehicle is in a braked state; and
performing the locking operation if the vehicle is in the braked state.

7. The parking control method for a vehicle according to claim 6, further comprising:
determining, based on abnormality of the actuator and a driving element thereof, whether locking can be normally performed; and
performing intervention assistance or prompting a locking failure if locking cannot normally performed;
optionally wherein the determining whether the vehicle is in a braked state comprises: determining whether parking can be performed based on a vehicle body posture and a vehicle speed; prompting a driver to park if parking cannot be performed; and determining, if parking can be performed, whether the vehicle is in the braked state, and starting an electronic brake system to perform braking if the vehicle is not in the braked state.

8. The parking control method for a vehicle according to claim 7, further comprising:
determining, based on the abnormality of the actuator and the driving element thereof, whether gear engagement can be normally performed; and
performing intervention assistance or prompting a gear engagement failure if gear engagement cannot be normally performed.

9. The parking control method for a vehicle according to claim 8, wherein the abnormality of the actuator and the driving element thereof comprises at least one of the following situations:
a stroke of the actuator is out of tolerance with a stroke of the driving element of the actuator;
the actuator and the driving element of the actuator are faulty;
a timeout occurs when the actuator performs locking; and
the driving element of the actuator is blocked.

10. The parking control method for a vehicle according to claim 9, wherein the determining, based on abnormality of the actuator and the driving element thereof, whether locking can be normally performed comprises:
reading the stroke of the actuator;
reading a running stroke of the driving element of the actuator;
comparing whether the stroke of the actuator is out of tolerance with the stroke of the driving element of the actuator; and
successfully performing locking if the stroke of the actuator is not out of tolerance with the stroke of the driving element of the actuator and it is checked that the actuator is located at a locked position;
optionally wherein the determining, based on abnormality of the actuator and the driving
element thereof, whether locking can be normally performed further comprises:
determining, if the stroke of the actuator is out of tolerance with the stroke of the driving element of the actuator, whether the actuator or the driving element of the actuator is faulty; and failing to perform locking if the actuator or the driving element of the actuator is faulty; or calibrating stroke data of the actuator and the driving element of the actuator if the actuator or the driving element of the actuator is not faulty; and/or
failing to perform locking if it is checked that the actuator is not located at the locked position and locking is timed out; or determining, if it is checked that the actuator is not located at the locked position and locking is not timed out, whether the driving element of the actuator is blocked; and re-comparing, if blocking is not occurred, whether the stroke of the actuator is out of tolerance with the stroke of the driving element of the actuator; or performing intervention assistance if blocking occurs.

11. The parking control method for a vehicle according to claim 9, wherein the determining, based on the abnormality of the actuator and the driving element thereof, whether gear engagement can be normally performed comprises:
reading the stroke of the actuator;
reading a running stroke of the driving element of the actuator;
comparing whether the stroke of the actuator is out of tolerance with the stroke of the driving element of the actuator; and
successfully performing gear engagement if the stroke of the actuator is not out of tolerance with the stroke of the driving element of the actuator and it is checked that the actuator is located at the gear engagement position;
optionally wherein the determining, based on the abnormality of the actuator and the driving element thereof, whether gear engagement can be normally performed further comprises:
determining, if the stroke of the actuator is out of tolerance with the stroke of the driving element of the actuator, whether the actuator or the driving element of the actuator is faulty; and failing to perform gear engagement if the actuator or the driving element of the actuator is faulty; or calibrating stroke data of the actuator and the driving element of the actuator if the actuator or the driving element of the actuator is not faulty; and/or
failing to perform gear engagement if it is checked that the actuator is not located at the gear engagement position and gear engagement is timed out; and determining, if it is checked that the actuator is not located at the gear engagement position and locking is not timed out, whether the driving element of the actuator is blocked; and re-comparing, if blocking is not occurred, whether the stroke of the actuator is out of tolerance with the stroke of the driving element of the actuator; or performing intervention assistance if blocking occurs.

12. The parking control method for a vehicle according to claim 8, wherein the performing intervention assistance comprises:
determining a brake situation;
driving a drive motor of the vehicle to output torque and continuing to perform locking or gear engagement if the vehicle is braked;
determining whether locking or gear engagement is successfully performed;
exiting intervention assistance if locking or gear engagement is successfully performed;
ending intervention assistance and reporting an error if locking or gear engagement is not successfully performed, and locking or gear engagement is timed out; and
continuing to drive the drive motor of the vehicle to output the torque if locking is not performed or gear engagement is successfully performed and locking or gear engagement is not timed out;
optionally wherein the determining a brake situation comprises: determining whether an electronic brake system is normal; and ending the intervention assistance and reporting the error if the electronic brake system is abnormal.

13. A storage medium, the storage medium having a computer program executable by a processor stored therein, wherein the computer program, when executed by the processor, causes the processor to perform the parking control method for a vehicle according to any one of claims 5 to 12.

14. A parking and gear engagement control system for a vehicle, comprising a parking apparatus for a vehicle according to any one of claims 1 to 4, a memory, and a processor, the memory having a computer program stored therein and executable by the processor, the computer program, when executed by the processor, causing the processor to perform the parking control method for a vehicle according to any one of claims 5 to 12.

15. A vehicle, comprising the parking and gear engagement control system for a vehicle according to claim 14
